# EUROPEAN PATENT APPLICATION

(11) **EP 4 502 222 A1**
(43) Date of publication of application: **05.02.2025**
(21) Application number: 22934775.2
(22) Date of filing: 27.10.2022
(51) Int. Cl.: C22C 38/58, C22C 38/04, C21D 8/02

(54) **HIGH HEAT INPUT WELDING STEEL PLATE AND MANUFACTURING METHOD THEREFOR**

(30) Priority: 31.03.2022 CN 202210343725
(71) Applicant: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: ZHANG, Yu, Suzhou, Jiangsu 215625 (CN); ZHAO, Fu, Suzhou, Jiangsu 215625 (CN); WANG, Na, Suzhou, Jiangsu 215625 (CN)
(74) Representative: Gille Hrabal Partnerschaftsgesellschaft mbB Patentanwälte
(86) International application number: PCT/CN2022/127884
(87) International publication number: WO 2023/184957

(57) **Abstract**

The present invention provides a steel plate for high heat input welding and a manufacturing method therefor. The chemical composition of the steel plate for high heat input welding comprises, in percentages by weight: C≤0.1%, Si≤0.15%, S≤0.004%, Mn+Cr+Ni+Cu: 1.5-4.5%, in which the weight ratio of Cr/Ni/Cu is 1:2:1, and Ti+Mg+Zr+Ca: 0.03-0.3%, in which Ti+Mg is 0.03-0.2%, with the balance being Fe and inevitable impurities, where the carbon equivalent Ceq is 0.36-0.42, and Ceq =C+Mn/6+(Cr+Mo+V )/5+(Ni+Cu)/15. In the manufacturing process for the steel plate, zirconium-calcium cored wire is added during the refining in an RH furnace, slabs are continuously cast after tapping out of RH furnace, and the slabs undergo recrystallization zone rolling operation and non-recrystallization zone rolling operation, to promote the formation of acicular ferrite and improve the crack arrest performance of the steel plate.

## Description

### TECHNICAL FIELD

The present invention relates to the technical field of metallurgical manufacturing of steel, and particularly to a steel plate for high heat input welding and a manufacturing method therefor.

### BACKGROUND

Steel for high heat input welding receives large energy during welding and the low-temperature toughness of the heat affected zone in welding is stable, so the welding efficiency can be improved. The crack arrest performance is an index reflecting the ability to resist crack propagation, and an excellent crack arrest performance indicates an excellent resistance to crack propagation, with which brittle fracture can be well prevented, to ensure the safety of parts or components.

With the increasing size of container-carrying vessels in recent years, increasingly higher requirements are raised for the performances, particularly, crack arrest and high heat input welding performances, of steel plates in the shipbuilding industry. In the prior art, there are few reports about crack-arrest steel that can be welded with high heat input. Usually, steel only has excellent crack arrest performance, but can't be welded with high heat input, or can be welded with high heat input, but the crack arrest performance is insufficient. Therefore, there is a need to provide a steel plate for high heat input welding that has excellent crack resistance and crack arrest performance to meet the needs of increasingly larger container-carrying vessels.

### SUMMARY

An object of the present invention is to provide a steel plate for high heat input welding, which can meet the requirement of welding with a heat input of 600 kJ/cm and has a crack arrest performance K_{ca} of ≥ 8500 N/mm^{1.5}, so as to solve the problem in the prior art that steel cannot be available for high input energy welding and have excellent crack arrest performance at the same time.

To achieve the above object of the present invention, an embodiment of the present invention provides a steel plate for high heat input welding, which has a chemical composition including, in percentages by weight: C≤0.1%, Si≤0.15%, S≤0.004%, Mn+Cr+Ni+Cu: 1.5-4.5%, in which the weight ratio of Cr/Ni/Cu is 1:2:1, and Ti+Mg+Zr+Ca: 0.03-0.3%, in which Ti+Mg is 0.03-0.2%, with the balance being Fe and inevitable impurities, where the carbon equivalent Ceq is 0.36-0.42%, and Ceq =C+Mn/6+(Cr+Mo+V )/5+(Ni+Cu)/15.

As a further improvement in an embodiment of the present invention, the content in percentages by weight of acicular ferrite in the steel plate for welding is 80% or higher, and the size of acicular ferrite is 15 µm or less.

As a further improvement in an embodiment of the present invention, the steel plate has a yield strength of ≥430 MPa, a tensile strength of 550-620 MPa, an elongation rate of ≥ 25%, and an impact energy at -40°C of ≥300 J.

As a further improvement in an embodiment of the present invention, when the steel plate is welded with a heat input of 600 kJ/cm, the tensile strength in the heat affected zone in welding is ≥540 MPa, and the impact energy at -40°C is greater than 150 J.

As a further improvement in an embodiment of the present invention, the steel plate has a crack arrest performance K_{ca} of ≥ 8500 N/mm^{1.5}.

An embodiment of the present invention further provides a method for manufacturing a steel plate for high heat input welding, which includes the following steps:
a smelting stage, including sequentially steelmaking in a converter, refining in an LF furnace, refining in an RH furnace, and continuously casting the molten steel after RH refining into slabs by a continuous casting machine, where zirconium-calcium cored wire is added during the refining in an RH furnace;
a rolling stage, including: heating the slab at 1050-1150°C for at least 320 min, when the temperature drops to 900-1000°C after the heating is completed, performing a recrystallization zone rolling operation, in which the reduction ratio per one pass is greater than 15%, and the total reduction ratio is greater than 50%, and when the temperature drops to 860°C or below, performing a non-recrystallization zone rolling operation, in which the reduction ratio per one pass is greater than 15%, and the total rolling reduction ratio in the non-recrystallization zone rolling operation is greater than 60%, where the temperature of the steel plate obtained by the recrystallization zone rolling operation and the non-recrystallization zone rolling operation is 30-50°C higher than Ar₃; and
a cooling stage, including: after the rolling is completed, cooling the steel plate at a cooling rate of greater than 10°C/s to 20-40°C higher than Bs, and then air cooling the steel plate to 350°C or less.

As a further improvement in an embodiment of the present invention, the area density of oxides of Ti, Mg, Zr or Ca in the slab formed by the continuous casting is greater than 1500 counts/mm².

As a further improvement in an embodiment of the present invention, in the rolling stage, Ar₃=910-310C-80Mn-20Cu-15Cr-55Ni-80Mo-0.35 (H-8), where H is the thickness of the target steel plate, and B s=63 0-45Mn-40V-35Si-30Cr-25Mo-20Ni-15W.

As a further improvement in an embodiment of the present invention, during steelmaking in a converter, the weight ratio of molten iron to clean scrap steel is (7-8):1, and the temperature of molten iron is 1350-1450°C.

As a further improvement in an embodiment of the present invention, the continuous casting temperature in the smelting stage is controlled to 1540-1560°C, and the casting speed is controlled to 1.1-1.3 m/min.

One or more technical solutions provided in the embodiments of the present application at least have the following technical effects or advantages:
According to an embodiment of the present invention, the content of Ti+Mg+Zr+Ca components is reasonably designed, by which the crystal grains are refined and the formation of acicular ferrite is facilitated, without reducing the element yield and increasing the cost. Element Mn is added in a Cr, Ni, and Cu system, the content of Mn+Cr+Ni+Cu components is reasonably designed, to ensure that the steel plate has a certain strength while the toughness is guaranteed. The Cr/Ni/Cu ratio is controlled to 1:2:1, to further improve the hardenability and low-temperature toughness of the steel plate. By a TMCP process, the recrystallization zone rolling operation and the non-recrystallization zone rolling operation are performed respectively, and the rolling reduction ratio is controlled, such that the content in percentages by weight of acicular ferrite in the steel plate is 80% or higher, and the size of acicular ferrite is 15 µm or less, thereby improving the crack arrest performance of the steel plate.

### DETAILED DESCRIPTION

The present invention will be described in detail below in conjunction with the specific embodiments which, however, are not intended to limit the present invention. The changes made to the reaction conditions, the reactants or the amounts of raw materials by persons of ordinary skill in the art according to these embodiments are included in the protection scope of the present invention.

An embodiment of the present invention provides a steel plate for high heat input welding, which has a chemical composition including, in percentages by weight, C≤0.1%, Si≤0.15%, S≤0.004%, Mn+Cr+Ni+Cu: 1.5-4.5%, in which the weight ratio of Cr/Ni/Cu is 1:2:1, and Ti+Mg+Zr+Ca: 0.03-0.3%, in which Ti+Mg is 0.03-0.2%, with the balance being Fe and inevitable impurities. The carbon equivalent Ceq is 0.36-0.42%, and Ceq =C+Mn/6+(Cr+Mo+V )/5+(Ni+Cu)/15, in which C, Mn, Cr, Mo, V, Cu and Ni in the formula indicate the contents in percentages by weight of various elements contained in the steel, where 0% is taken when an element is not contained. In the sum/ratio calculation of various elements above, the contents in percentages by weight of various elements contained in the steel are used.

The function and dosage selection of the components contained in the present invention are described in detail below:
C: C has a great influence on the strength, low-temperature toughness, elongation rate and welding performance, especially high heat input welding performance, of steel plates. From the perspective of improving the low-temperature toughness, crack resistance and crack arrest performance, and high heat input welding performance, the content of C in steel is desirably kept to be low. Considering the strength of the steel plate, the microstructure control during the manufacturing process and the manufacturing cost, the content of C cannot be too low. Based on this, the C content is ≤0.1%.
Si: Although Si can promote the deoxygenation of molten steel in the smelting process and improve the strength of steel plate, it seriously damages the low-temperature toughness, elongation rate and weldability of steel plate. In addition, when a steel plate with a high Mn content is welded with a high heat input, Si promotes the formation of M-A islands, and the size of the formed M-A islands is coarse and large and unevenly distributed, which seriously damage the low-temperature toughness, the crack resistance and crack arrest performance of the heat affected zone in welding. Therefore, the Si content in steel should be controlled as low as possible.
S: As a harmful impurity in steel, S has a great damage to the low-temperature toughness of steel plate. More importantly, S bonds with Mn in steel to form a MnS impurity. When the Mn content in steel is high, more MnS is formed and the size is large. In addition, MnS has plasticity, which causes MnS to extend along the rolling direction during the hot rolling process, to form a MnS impurity belt along the rolling direction. It seriously damages the low-temperature impact toughness of the steel plate, particularly the crack resistance and crack arrest performance (MnS is not only a crack starter location, but also can reduce the energy required for crack propagation, and greatly reduce the resistance to crack propagation), the elongation rate, the Z-direction property, and the weldability (especially the high-heat-input weldability). Moreover, S is also a main element that produces thermal brittleness during hot rolling, and the content is desirably theoretically as low as possible. However, considering the operability of steelmaking, the content of S should be controlled at ≤0.0040%.
Mn, Cr, Ni, Cu: as important solid solution strengthening elements in steel, Mn, Cr, Ni, and Cu can improve the low-temperature toughness of steel plates and play a key role in the formation of acicular ferrite when added in an appropriate amount. The ratio of Cr/Ni/Cu is controlled to 1:2:1, to further improve the low-temperature toughness. When the total content in percentages by weight of Mn+Cr+Ni+Cu is lower than 1.5%, the hardenability of the steel plate is low, and acicular ferrite is not easy to form. When the total content in percentages by weight of Mn+Cr+Ni+Cu is higher than 4.5%, the low-temperature toughness of the steel plate is poor. Therefore, the total content in percentages by weight of Mn+Cr+Ni+Cu is controlled to 1.5-4.5%, so the steel plate has a high low-temperature toughness, and acicular ferrite is easy to form during phase transformation. Furthermore, the individual contents of Mn, Cr, Ni, and Cu are not sole, and the contents of the Mn, Cr, Ni, and Cu elements can be adjusted respectively according to various performances of the steel.
Ti, Mg, Zr, and Ca: Ti, Mg, Zr, and Ca are important elements to form oxide inclusions. When they are added in an appropriate amount, the grains are refined, and they play a key role in forming acicular ferrite. During the thermal cycle of steel in welding, such oxide inclusions can induce the nucleation of intragranular ferrite, thus reducing the formation of grain boundary ferrite or upper bainite lath, and improving the low temperature impact toughness of the heat affected zone in welding. Furthermore, similar to Mn, Cr, Ni, and Cu elements, the contents of Ti, Mg, Zr, and Ca are not sole, and the contents of Ti, Mg, Zr, and Ca elements can be adjusted according to various performances of the steel.

In summary, compared with related art, in the chemical composition design of the present invention, the total content of Ti+Mg+Zr+Ca is reasonably designed, since Ti, Mg, Zr, and Ca oxides can effectively promote the formation of acicular ferrite. The total content of Mn+Cr+Ni+Cu is reasonably designed and the ratio of Cr/Ni/Cu is controlled, so as to improve the hardenability and low-temperature toughness of the steel plate, while maintaining a certain strength of the steel plate.

Particularly, with respect to the mechanical performances, numerous experimental studies confirm that the steel plate for welding has a yield strength of ≥430 MPa, a tensile strength of 550-620 MPa, an elongation rate of ≥ 25%, an impact energy at -40°C of ≥300 J, and a crack arrest performance K_{ca} of ≥ 8500 N/mm^{1.5}. When the welding heat input is 600 kJ/cm, the tensile strength in the heat affected zone in welding is ≥540 MPa, and an impact energy at -40°C of ≥150 J.

An embodiment further provides a method for manufacturing a steel plate for high heat input welding, includes the following steps:
(1) Smelting stage: Steelmaking in a converter, refining in an LF furnace, and refining in an RH furnace are sequentially performed. Then, the molten steel after RH refining is continuously casted into slabs by a continuous casting machine. Zirconium-calcium cored wire is added during the refining in an RH furnace. Preferred implementation of each procedure in the smelting stage is described in detail below.
   a) Steelmaking in a converter: The weight ratio of molten iron to clean scrap steel is (7-8):1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel, such that the content in percentages by weight of Mn+Cr+Ni+Cu in the molten steel meets 1.5-4.5%, the weight ratio of Cr/Ni/Cu is 1:2:1, and the content of Ti+Mg meets 0.03-0.2%.
   c) Refining in an RH furnace: Zirconium-calcium cored wire is added into the molten steel during the RH refining process, such that the content in percentages by weight of Ti+Mg+Zr+Ca in the molten steel meets 0.03-0.3%.
   d) Continuous casting: The continuous casting temperature is controlled to 1540-1560°C, and the casting speed is controlled to 1.1-1.3m/min.
   By controlling the total content in percentages by weight of Mn+Cr+Ni+Cu to 1.5-4.5% and the Cr/Ni/Cu ratio to 1:2:1, the hardenability of the steel plate can be effectively increased and the low-temperature toughness can be improved, while maintaining a certain strength of the steel plate. Oxides of Ti, Mg, Zr, and Ca can effectively prevent the growth of austenite grains in the heat affected zone in welding, promote the nucleation of intragranular acicular ferrite, thus improving the low-temperature toughness of the heat affected zone during high heat input welding. Zr and Ca added in the form of cored wire can not only disperse oxide particles, but also refine the size of oxide particles, which is more conducive to the formation of acicular ferrite. Among Ti, Mg, Zr, and Ca, Ti and Mg have a large content, to effectively reduce the production cost.
(2) Rolling stage: The slab is heated at 1050-1150°C for at least 320 min. After the heating is completed, when the temperature drops to 900-1000°C, a recrystallization zone rolling operation is performed, in which the reduction ratio per one pass is greater than 15%, and the total reduction ratio is greater than 50%; and when the temperature drops to 860°C or below, a non-recrystallization zone rolling operation is performed, in which the reduction ratio per one pass is greater than 15%, and the total rolling reduction ratio in the non-recrystallization zone rolling operation is greater than 60%. The temperature of the steel plate obtained by the recrystallization zone rolling operation and the non-recrystallization zone rolling operation is 30-50°C higher than Ar₃.
   The slab is rolled in the recrystallization zone, and the grain is refined under the action of an external force at a high temperature. However, the grain refinement in the recrystallization zone is limited. Therefore, the non-recrystallization zone rolling operation is performed, to flatten and elongate the refined austenite, increase the grain boundary area of austenite per unit volume, and increase the nucleation site and nucleation ratio of ferrite. The control of Cr/Ni/Cu ratio and the control of the total content of Ti, Mg, Zr, and Ca, combined with the recrystallization zone rolling operation and the non-recrystallization zone rolling operation, allow the proportion of acicular ferrite in the metal structure to reach 80% or higher, so as to improve the crack arrest performance of the steel plate.
(3) Cooling stage: After the rolling is completed, the steel plate is fed to an accelerated cooling control (ACC) device at a maximum feeding speed of a roller table used for feeding the steel plate. After the steel plate is cooled to 20-40°C higher than Bs by the ACC device at a cooling rate greater than 10°C/s, the steel plate is air cooled to 350°C or less.

After the rolling is completed, the steel plate is rapidly cooled to 20-40°C higher than Bs, and then air cooled. The rapid cooling at Bs temperature will promote the formation of bainite and reduce the strength of the steel plate.

In the rolling stage, Ar₃=910-310C-80Mn-20Cu-15Cr-55Ni-80Mo-0.35 (H-8), where H is the thickness of the target steel plate, and Bs=630-45Mn-40V-35Si-30Cr-25Mo-20Ni-15W. In the formula, C, Mn, Cu, Cr, Ni, Mo, V, Si and W indicate the percentages value by weight of various elements contained in the steel.

Further, the area density of oxides of Ti, Mg, Zr or Ca in the slab formed by the continuous casting is greater than 1500 counts/mm². These oxides can effectively prevent the growth of austenite grains in the heat affected zone in welding, to promote the formation of acicular ferrite, thus ensuring that the heat affected zone has excellent performances during high heat input welding.

The technical solutions of the present application will be further described below with reference to some specific embodiments.

### Example 1

Example 1 provides a steel plate for high heat input welding. The chemical composition of the steel plate includes, in percentages by weight: C: 0.08%, Si: 0.15%, S: 0.002%, Mn: 1.55%, Cr: 0.15%, Ni: 0.3%, Cu: 0.15%, Ti: 0.03%, Mg: 0.0015%, Zr: 0.0015%, and Ca: 0.0015%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 7:1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and a sample is taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.0015%. Ultra-lowly carbonized rice husk is added for heat insulation before tapping.
   d) Continuous casting: The continuous casting temperature is controlled to 1550°C, and the casting speed is controlled to 1.2 m/min, to prepare a continuously casted slab having a thickness of 320 mm.
(2) Rolling stage:
   The slab obtained in the smelting stage is heated at 1050°C for 330 min. After heating, a recrystallization zone rolling operation is performed. During the recrystallization zone rolling operation, the rolling start temperature is 950°C, the reduction ratio per one pass is 16%, 4 passes of rolling is performed, and the rolling end temperature is 900°C. Then, a non-recrystallization zone rolling operation is performed. During the non-recrystallization zone rolling operation, the rolling start temperature is 850°C, the reduction ratio per one pass is 16%, 5 passes of rolling is performed, and the rolling end temperature is 770°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.5°C/s, the steel plate is air cooled to 350°C or less.

### Example 2

Example 2 provides a steel plate for high heat input welding. The chemical composition of the steel plate includes, in percentages by weight: C: 0.07%, Si: 0.15%, S: 0.002%, Mn: 1.6%, Cr: 0.2%, Ni: 0.4%, Cu: 0.2%, Ti: 0.03%, Mg: 0.0015%, Zr: 0.0015%, and Ca: 0.0015%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 8:1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and a sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.0015%. Ultra-lowly carbonized rice husk is added for heat insulation before tapping.
   d) Continuous casting: The continuous casting temperature is controlled to 1540°C, and the casting speed is controlled to 1.1m/min, to prepare a continuously casted slab having a thickness of 320 mm.
(2) Rolling stage:
   The slab obtained in the smelting stage is heated at 1150°C for 335min. After heating, a recrystallization zone rolling operation is performed. During the recrystallization zone rolling operation, the rolling start temperature is 970°C, the reduction ratio per one pass is 16%, 4 passes of rolling is performed, and the rolling end temperature is 920°C. Then, a non-recrystallization zone rolling operation is performed. During the non-recrystallization zone rolling operation, the rolling start temperature is 840°C, the reduction ratio per one pass is 16%, 5 passes of rolling is performed, and the rolling end temperature is 760°C, to obtain a steel plate with a thickness of 66 mm.
(3) Cooling stage:
   After the rolling is completed, the steel plate is fed to an ACC device at a maximum feeding speed of a roller table. After the steel plate is cooled to 575°C by the ACC device at a cooling rate of 10.3 °C/s, the steel plate is air cooled to 350°C or less.

### Example 3

Example 3 provides a steel plate for high heat input welding. The chemical composition of the steel plate includes, in percentages by weight: C: 0.08%, Si: 0.10%, S: 0.002%, Mn: 1.55%, Cr: 0.15%, Ni: 0.3%, Cu: 0.15%, Ti: 0.03%, Mg: 0.002%, Zr: 0.002%, and Ca: 0.002%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 7: 1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and A sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.002%. Ultra-lowly carbonized rice husk is added for heat insulation before tapping.
   d) Continuous casting: The continuous casting temperature is controlled to 1560°C, and the casting speed is controlled to 1.3m/min, to prepare a continuously casted slab having a thickness of 320 mm.
(2) Rolling stage:
   The slab obtained in the smelting stage is heated at 1100°C for 332min. After heating, a recrystallization zone rolling operation is performed. During the recrystallization zone rolling operation, the rolling start temperature is 960°C, the reduction ratio per one pass is 16%, 4 passes of rolling is performed, and the rolling end temperature is 910°C. Then, a non-recrystallization zone rolling operation is performed. During the non-recrystallization zone rolling operation, the rolling start temperature is 855°C, the reduction ratio per one pass is 16%, 5 passes of rolling is performed, and the rolling end temperature is 770°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.2 °C/s, the steel plate is air cooled to 350°C or less.

### Example 4

Example 4 provides a steel plate for high heat input welding. The chemical composition of the steel plate includes, in percentages by weight: C: 0.08%, Si: 0.15%, S: 0.002%, Mn: 1.5%, Cr: 0.15%, Ni: 0.3%, Cu: 0.15%, Ti: 0.03%, Mg: 0.002%, Zr: 0.0015%, and Ca: 0.0015%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 7: 1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and a sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.0015%. Ultra-lowly carbonized rice husk is added for heat insulation before tapping.
   d) Continuous casting: The continuous casting temperature is controlled to 1550°C, and the casting speed is controlled to 1.2 m/min, to prepare a continuously casted slab having a thickness of 320 mm.
(2) Rolling stage:
   The slab obtained in the smelting stage is heated at 1050°C for 330 min. After heating, a recrystallization zone rolling operation is performed. During the recrystallization zone rolling operation, the rolling start temperature is 950°C, the reduction ratio per one pass is 16%, 4 passes of rolling is performed, and the rolling end temperature is 900°C. Then, a non-recrystallization zone rolling operation is performed. During the non-recrystallization zone rolling operation, the rolling start temperature is 850°C, the reduction ratio per one pass is 16%, 5 passes of rolling is performed, and the rolling end temperature is 770°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.5°C/s, the steel plate is air cooled to 350°C or less.

### Example 5

Example 5 provides a steel plate for high heat input welding. The chemical composition of the steel plate includes, in percentages by weight: C: 0.07%, Si: 0.15%, S: 0.002%, Mn: 1.55%, Cr: 0.2%, Ni: 0.4%, Cu: 0.2%, Ti: 0.03%, Mg: 0.0015%, Zr: 0.0015%, and Ca: 0.0015%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 8:1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and a sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.0015%. Ultra-lowly carbonized rice husk is added for heat insulation before tapping.
   d) Continuous casting: The continuous casting temperature is controlled to 1540°C, and the casting speed is controlled to 1.1m/min, to prepare a continuously casted slab having a thickness of 320 mm.
(2) Rolling stage:
   The slab obtained in the smelting stage is heated at 1150°C for 335min. After heating, a recrystallization zone rolling operation is performed. During the recrystallization zone rolling operation, the rolling start temperature is 970°C, the reduction ratio per one pass is 16%, 4 passes of rolling is performed, and the rolling end temperature is 925°C. Then, a non-recrystallization zone rolling operation is performed. During the non-recrystallization zone rolling operation, the rolling start temperature is 850°C, the reduction ratio per one pass is 16%, 5 passes of rolling is performed, and the rolling end temperature is 760°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.1°C/s, the steel plate is air cooled to 350°C or less.

### Example 6

Example 6 provides a steel plate for high heat input welding. The chemical composition of the steel plate includes, in percentages by weight: C: 0.07%, Si: 0.10%, S: 0.002%, Mn: 1.55%, Cr: 0.18%, Ni: 0.36%, Cu: 0.18%, Ti: 0.03%, Mg: 0.002%, Zr: 0.002%, and Ca: 0.002%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 7:1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and a sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.002%. Ultra-lowly carbonized rice husk is added for heat insulation before tapping.
   d) Continuous casting: The continuous casting temperature is controlled to 1560°C, and the casting speed is controlled to 1.3m/min, to prepare a continuously casted slab having a thickness of 320 mm.
(2) Rolling stage:
   The slab obtained in the smelting stage is heated at 1100°C for 332min. After heating, a recrystallization zone rolling operation is performed. During the recrystallization zone rolling operation, the rolling start temperature is 960°C, the reduction ratio per one pass is 16%, 4 passes of rolling is performed, and the rolling end temperature is 910°C. Then, a non-recrystallization zone rolling operation is performed. During the non-recrystallization zone rolling operation, the rolling start temperature is 855°C, the reduction ratio per one pass is 16%, 5 passes of rolling is performed, and the rolling end temperature is 770°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.2°C/s, the steel plate is air cooled to 350°C or less.

### Example 7

Example 7 provides a steel plate for high heat input welding. The chemical composition of the steel plate includes, in percentages by weight: C: 0.08%, Si: 0.15%, S: 0.002%, Mn: 1.55%, Cr: 0.15%, Ni: 0.3%, Cu: 0.15%, Ti: 0.03%, Mg: 0.0015%, Zr: 0.002%, Ca: 0.002%, with the balance being Fe and inevitable impurities.

A method for manufacturing the steel plate for high heat input welding includes the following steps:
(1) Smelting stage:
   a) Steelmaking in a converter: The weight ratio of molten iron to clean scrap steel is 7: 1, and the smelting temperature of molten iron is 1350-1450°C. Ferromanganese, ferrosilicon and lime are added into the molten iron in sequence, and tapping is carried out after smelting.
   b) Refining in an LF furnace: After tapping from the converter, Mn, Cr, Ni, Cu, Ti, and Mg elements are added to the molten steel according to the above chemical composition of the steel plate for welding, the temperature is determined, and A sample was taken. Tapping is carried out after the elements meet the requirement for the chemical composition of the steel plate for welding.
   c) Refining in an RH furnace: Zirconium-calcium cored wire is added into the molten steel during the RH refining process, such that the contents in percentages by weight of Zr and Ca in the molten steel are both 0.002%. Ultra-lowly carbonized rice husk is added for heat insulation before tapping.
   d) Continuous casting: The continuous casting temperature is controlled to 1550°C, and the casting speed is controlled to 1.2 m/min, to prepare a continuously casted slab having a thickness of 320 mm.
(2) Rolling stage:
   The slab obtained in the smelting stage is heated at 1050°C for 330 min. After heating, a recrystallization zone rolling operation is performed. During the recrystallization zone rolling operation, the rolling start temperature is 950°C, the reduction ratio per one pass is 16%, 4 passes of rolling is performed, and the rolling end temperature is 900°C. Then, a non-recrystallization zone rolling operation is performed. During the non-recrystallization zone rolling operation, the rolling start temperature is 850°C, the reduction ratio per one pass is 16%, 5 passes of rolling is performed, and the rolling end temperature is 770°C, to obtain a steel plate with a thickness of 66 mm.
(3) Cooling stage:
   After the rolling is completed, the steel plate is fed to an ACC device at a maximum feeding speed of a roller table. After the steel plate is cooled to 580°C by the ACC device at a cooling rate of 10.5°C/s, the steel plate is air cooled to 350°C or less.

### Example 8

Example 8 provides a steel plate for high heat input welding. The chemical composition of the steel plate includes, in percentages by weight: C: 0.07%, Si: 0.15%, S: 0.002%, Mn: 1.6%, Cr: 0.2%, Ni: 0.4%, Cu: 0.2%, Ti: 0.03%, Mg: 0.0015%, Zr: 0.002%, and Ca: 0.002%, with the balance being Fe and inevitable impurities.

A method for manufacturing the steel plate for high heat input welding includes the following steps:
(1) Smelting stage:
a) Steelmaking in a converter: The weight ratio of molten iron to clean scrap steel is 8: 1, and the smelting temperature of molten iron is 1350-1450°C. Ferromanganese, ferrosilicon and lime are added into the molten iron in sequence, and tapping is carried out after smelting.
b) Refining in an LF furnace: After tapping from the converter, Mn, Cr, Ni, Cu, Ti, and Mg elements are added to the molten steel according to the above chemical composition of the steel plate for welding, the temperature is determined, and a sample was taken. Tapping is carried out after the elements meet the requirement for the chemical composition of the steel plate for welding.
c) Refining in an RH furnace: Zirconium-calcium cored wire is added into the molten steel during the RH refining process, such that the contents in percentages by weight of Zr and Ca in the molten steel are both 0.002%. Ultra-lowly carbonized rice husk is added for heat insulation before tapping.
d) Continuous casting: The continuous casting temperature is controlled to 1555°C, and the casting speed is controlled to 1.2 m/min, to prepare a continuously casted slab having a thickness of 320 mm.

(2) Rolling stage:
The slab obtained in the smelting stage is heated at 1150°C for 335min. After heating, a recrystallization zone rolling operation is performed. During the recrystallization zone rolling operation, the rolling start temperature is 970°C, the reduction ratio per one pass is 16%, 4 passes of rolling is performed, and the rolling end temperature is 920°C. Then, a non-recrystallization zone rolling operation is performed. During the non-recrystallization zone rolling operation, the rolling start temperature is 840°C, the reduction ratio per one pass is 16%, 5 passes of rolling is performed, and the rolling end temperature is 760°C, to obtain a steel plate with a thickness of 66 mm.
(3) Cooling stage:
After the rolling is completed, the steel plate is fed to an ACC device at a maximum feeding speed of a roller table. After the steel plate is cooled to 580°C by the ACC device at a cooling rate of 10.2°C/s, the steel plate is air cooled to 350°C or less.

**[Table 1]**

| | Steel grades | Thickness/ mm | Steel plate performance | | | | Performance of welded joint | | | Crack arrest performance |
|---|---|---|---|---|---|---|---|---|---|---|
| | | | Yield strength/ MPa | Tensile strength/ MPa | Elongation rate/% | Impact energy at - 40°C/J | Welding heat input kJ/cm | Tensile strength/ MPa | CGHAZ Impact energy at - 40°C/J | Crack arrest performance K_{ca}/N/mm^{1.5} |
| Example 1 | EH40 | 66 | 471 | 595 | 27 | 306,311,317 | 600 | 573 | 236,217,222 | 8700 |
| Example 2 | EH40 | 66 | 485 | 600 | 28 | 326,335,323 | 600 | 578 | 245,214,235 | 9000 |
| Example 3 | EH40 | 66 | 494 | 607 | 26 | 316,319,321 | 600 | 584 | 246,231,240 | 8800 |
| Example 4 | EH40 | 66 | 475 | 591 | 26 | 316,301,307 | 600 | 575 | 226,227,232 | 8700 |
| Example 5 | EH40 | 66 | 480 | 601 | 28 | 316,325,333 | 600 | 581 | 235,224,245 | 8900 |
| Example 6 | EH40 | 66 | 491 | 609 | 27 | 326,309,311 | 600 | 584 | 236,241,241 | 8700 |
| Example 7 | EH40 | 66 | 470 | 590 | 27 | 304,310,316 | 600 | 575 | 235,216,223 | 8600 |
| Example 8 | EH40 | 66 | 481 | 603 | 28 | 325,336,323 | 600 | 572 | 235,215,236 | 8900 |

Table 1 shows various performances of steel plates manufactured in Examples 1 to 8. It can be seen from Table 1 that the yield strength of the the steel plate is greater than 430 MPa, the tensile strength is between 550 and 620 MPa, the elongation rate is 25% or more, and the impact energy at -40°C is 300J or more. When the welding heat input is 600 kJ/cm, the tensile strength in the heat affected zone in welding is 540 MPa or more, and the impact energy at - 40°C is 150J or more. The crack arrest performance K_{ca} is 8500 N/mm^{1.5} or more.

Apparently, the above-described embodiments are merely examples provided for clarity of description, and are not intended to limit the implementations of the present invention. Other variations or changes can be made by those skilled in the art based on the above description. The embodiments are not exhaustive herein. Obvious variations or changes derived therefrom also fall within the protection scope of the present invention.

## Claims

1. A steel plate for high heat input welding,
having a chemical composition comprising, in percentages by weight, C≤0.1%, Si≤0.15%, S≤0.004%, Mn+Cr+Ni+Cu: 1.5-4.5%, in which the weight ratio of Cr/Ni/Cu is 1:2:1, and Ti+Mg+Zr+Ca: 0.03-0.3%, in which Ti+Mg is 0.03-0.2%, with the balance being Fe and inevitable impurities, where the carbon equivalent Ceq is 0.36-0.42%, and Ceq =C+Mn/6+(Cr+Mo+V )/5+(Ni+Cu)/15.

2. The steel plate for high heat input welding according to claim 1, wherein the content in percentages by weight of acicular ferrite in the steel plate for welding is 80% or higher, and the size of acicular ferrite is 15 µm or less.

3. The steel plate for high heat input welding according to claim 1, wherein the steel plate has a yield strength of ≥430 MPa, a tensile strength of 550-620 MPa, an elongation rate of ≥ 25%, and an impact energy at -40°C of ≥300 J.

4. The steel plate for high heat input welding according to claim 1, wherein when the steel plate is welded with a heat input of 600 kJ/cm, the tensile strength in the heat affected zone in welding is ≥540 MPa, and the impact energy at -40°C is greater than 150 J.

5. The steel plate for high heat input welding according to claim 1, wherein the steel plate has a crack arrest performance K_{ca} of ≥ 8500 N/mm^{1.5}.

6. A method for producing a steel plate for high heat input welding according to claim 1, comprising:
a smelting stage, comprising sequentially steelmaking in a converter, refining in an LF furnace, and refining in an RH furnace, and continuously casting the molten steel after RH refining into slabs by a continuous casting machine, in which zirconium-calcium cored wire is added during the refining in an RH furnace;
a rolling stage, comprising: heating the slab at 1050-1150°C for at least 320 min, when the temperature drops to 900-1000°C after the heating is completed, performing a recrystallization zone rolling operation, in which the reduction ratio per one pass is greater than 15%, and the total reduction ratio is greater than 50%, and when the temperature drops to 860°C or below, performing a non-recrystallization zone rolling operation, in which the reduction ratio per one pass is greater than 15%, and the total rolling reduction ratio in the non-recrystallization zone rolling operation is greater than 60%, where the temperature of the steel plate obtained by the recrystallization zone rolling operation and the non-recrystallization zone rolling operation is 30-50°C higher than Ar₃; and
a cooling stage, comprising: after the rolling is completed, cooling the steel plate at a cooling rate of greater than 10°C/s to 20-40°C higher than Bs, and then air cooling the steel plate to 350°C or less.

7. The method for producing a steel plate for high heat input welding according to claim 6, wherein the area density of oxides of Ti, Mg, Zr or Ca in the slab formed by the continuous casting is greater than 1500 counts/mm².

8. The method for producing a steel plate for high heat input welding according to claim 6, wherein in the rolling stage, Ar₃=910-310C-80Mn-20Cu-15Cr-55Ni-80Mo-0.35 (H-8), where H is the thickness of the target steel plate, and Bs=630-45Mn-40V-35Si-30Cr-25Mo-20Ni-15W.

9. The method for producing a steel plate for high heat input welding according to claim 6, wherein during the steelmaking in a converter, the weight ratio of molten iron to clean scrap steel is (7-8):1, and the temperature of molten iron is 1350-1450°C.

10. The method for producing a steel plate for high heat input welding according to claim 6, wherein the continuous casting temperature in the smelting stage is controlled to 1540-1560°C, and the casting speed is controlled to 1.1-1.3 m/min.
